## Europäisches Patentamt
## European Patent Office
## Office européen des brevets

(19)

(11) Publication number: **0 032 776**
**B1**

(12) **EUROPEAN PATENT SPECIFICATION**

(45) Date of publication of patent specification: **25.04.84**

(51) Int. Cl.³: **A 01 F 25/20, A 01 D 90/10**

(21) Application number: **81200062.8**

(22) Date of filing: **19.01.81**

(54) Apparatus for loosening and apportioning silage or the like material.

(30) Priority: **18.01.80 NL 8000348**

(43) Date of publication of application:
**29.07.81 Bulletin 81/30**

(45) Publication of the grant of the patent:
**25.04.84 Bulletin 84/17**

(84) Designated Contracting States:
**AT BE CH DE FR GB IT LI LU NL SE**

(56) References cited:
**EP - A - 0 026 143
BE - A - 838 165
DE - A - 2 847 896
DE - A - 2 851 304
NL - A - 7 901 217**

(73) Proprietor: **Trioliet-Mullos Silo Nederland B.V.
Smitsbreeweg 2
NL-7581 HE Losser (NL)**

(72) Inventor: **Liet, Cornelis Hendricus
Denekamperdijk 38
NL-7581 PJ Losser (NL)**
Inventor: **Liet, Fredericus
Wilgenkamp 74
NL-7581 HD Losser (NL)**

(74) Representative: **Jacobson, Gerard
Octrooibureau Los en Stigter B.V. Postbus 20052
NL-1000 HB Amsterdam (NL)**

Courier Press, Leamington Spa, England.

Apparatus for loosening and apportioning silage or the like material

The invention relates to an apparatus for loosening and apportioning silage or the like material, provided with a transport container which has a coupling member, adapted to be coupled with a tractor, said transport container comprising a carrier conveyor, which carrier conveyor is coupled, or couplable, with a drive means; a loosening and apportioning mechanism being arranged adjacent the front end of the transport container, which loosening and apportioning mechanism is coupled, or couplable, with a drive means, the movement of the carrier conveyor being directed towards the loosening and apportioning mechanism; and the transport container further comprising a tilting device arranged at the rear end of the transport container for taking up and discharging the material to the carrier conveyor, which tilting device has a support means which in its lowermost position extends approximately horizontally substantially at the level of the ground and which is pivotable through approximately 90°, the loosened material falling downwardly from the loosening and apportioning mechanism.

An apparatus for loosening and apportioning silage or the like material of this type is known from NL—A—79.01217. With the known apparatus, wherein the transport container is combined with a cutting means, the tilting device has to be displaced upwardly before the silage block, which rests on the tilting device, may be supplied to the carrier conveyor by means of a pivotal movement of the tilting device through approximately 90°. Further, the loosening and apportioning mechanism of the known apparatus consists of two distributing rollers placed one above the other, between which the silage has to pass. In use, most of the time very heavy loads are exerted on these distributing rollers, whilst on the other hand the last part of a silage block may "shoot" through the distributing rollers, which may lead to an overload of these distributing rollers and even to a blockage thereof.

It is an object of the present invention to provide an apparatus for loosening and apportioning silage or the like material, wherein these disadvantages are removed in an effective manner.

To this end the apparatus according to the invention is characterized in that the tilting device carries out exclusively a pivotal movement, while the loosening and apportioning mechanism comprises a loosening conveyor, which inclines upwardly with respect to the horizontal plane and to the carrier conveyor.

According to the invention the tilting device is no longer displaced upwardly, but the material is moved upwardly by means of the loosening conveyor after it has been deposited on the carrier conveyor. In this way the construction is simplified, while the loosened material can yet be discharged downwardly from the loosening and apportioning mechanism.

The application of the loosening conveyor which inclines upwardly with respect to the horizontal plane and to the carrier conveyor has the important advantage that this loosening conveyor first comes into engagement with the front and bottom part of the material supplied by the carrier conveyor, so that the material is taken along by the loosening conveyor in a loosened state and in a very gradual manner.

It is observed that from BE—A—838.165 an apparatus for loosening and apportioning silage or the like material is known, provided with a transport container which has a coupling member adapted to be coupled with a tractor, said transport container being provided with a driven carrier conveyor. The transport conveyor is further provided with a tilting device for taking up and discharging the material to the carrier conveyor, which tilting device is exclusively pivotable through approximately 90° and is provided at its rear and lower end with a rotor extending approximately at the level of the ground which rotor feeds the material into the tilting device. This known apparatus does not comprise a loosening conveyor which inclines upwardly with respect to the horizontal plane and to the carrier conveyor, while the tilting device does not show a support means which in its lowermost position extends approximately horizontally substantially at the level of the ground.

DE—A—2.847.896 describes an apparatus for loosening and apportioning silage or the like material, provided with a transport container which has a coupling member adapted to be coupled with a tractor, said transport container being provided with a driven carrier conveyor. A driven loosening and apportioning mechanism is supported on the transport container, while the movement of the carrier conveyor is directed towards the loosening and apportioning mechanism. The transport conveyor is further provided with a tilting device for taking up and discharging the material to the carrier conveyor, which tilting device has a support means which exclusively carries out a pivotal movement through approximately 90°, the loosened material falling downwardly from the loosening and apportioning mechanism. In this known apparatus the support means is adapted to take up a pallet and does not extend substantially at the level of the ground in its lowermost position. Further, this known apparatus is not provided with a loosening conveyor, which inclines upwardly with respect to the horizontal plane and to the carrier conveyor, as the loosening and apportioning mechanism of the known apparatus again consists of two distributing rollers placed one above the other.

The pre-published EP—A—0026143 describes an apparatus for loosening and apportioning silage or the like material, which is combined with a silage block cutter. The apparatus is provided with a coupling member, adapted to be coupled with a tractor and comprises a horizontal conveyor, which extends in the transverse direction and which is provided with loosening and apportioning means. Further the silage cutter comprises a lower cross-member, which carries a plurality of tines on which a silage block is supported during the cutting operation. This cross-member with its tines forms a tilting device having a support means which in its lowermost position extends approximately horizontally substantially at the level of the ground and which carries out exclusively a pivotal movement through approximately 90°. After a first silage block has been cut this block is deposited on the horizontal conveyor by the pivotal movement of the cross member with its tines through approximately 90°. Hereupon the cross member with the tines are returned to their initial position, whereupon a second silage block is cut. After the apparatus is transported by the tractor to the location where the silage has to be distributed the horizontal conveyor is driven, whereafter its loosening means engage the lower surface of the silage block which itself is maintained in rest by upstanding walls or the like of the apparatus. At the discharge end of the horizontal conveyor an apportioning roller is positioned above the conveyor. After the first silage block is discharged the second silage block is deposited on the conveyor by a pivotal movement of the cross member with the tines, whereafter the discharge operation is continued.

The invention will hereafter be elucidated with reference to the drawing, which shows several embodiments by way of example of an apparatus according to the invention for loosening and apportioning silage.

Fig. 1 is a perspective view of an embodiment of the apparatus according to the invention in the receiving position, in which a silage block is taken up from the ground.

Fig. 2 is a perspective view of the apparatus according to fig. 1 in the loosening and apportioning position.

Figs. 3 and 4 are details of the apparatus according to figs. 1 and 2 on a larger scale.

Fig. 5 is a partial perspective view of another embodiment of the apparatus according to the invention.

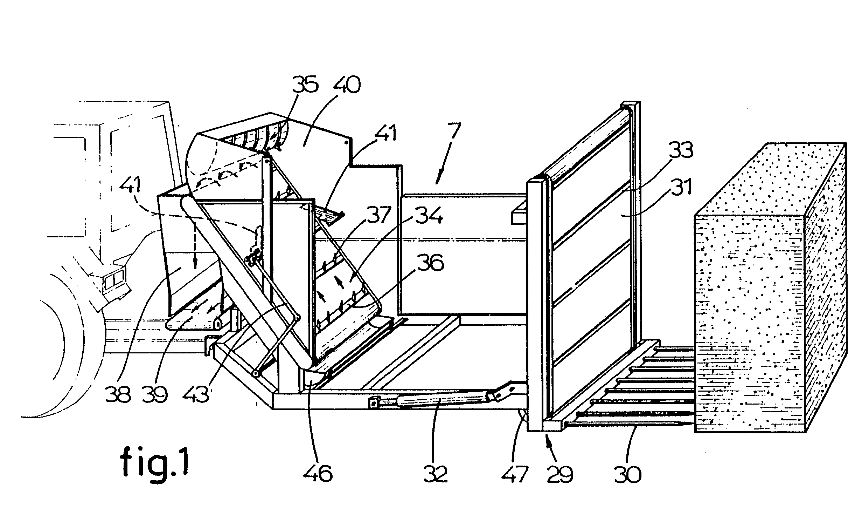

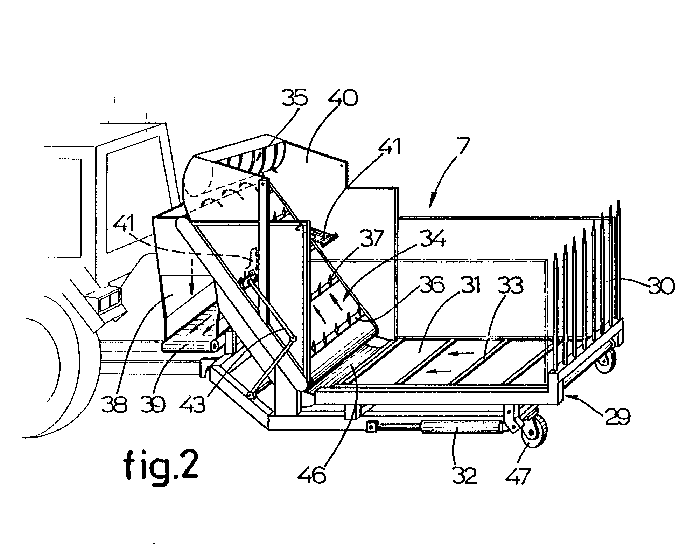

Figs. 1 and 2 show an embodiment of the apparatus according to the invention, which is in the form of a transport truck 7 comprising a container and which is intended in particular to loosen and apportion silage blocks, which are temporarily stored at a suitable place, such as a buffer store at the end of a forage passageway, for instance in a quantity, required for a specific feeding period.

This apparatus comprises a rear tilting device 29, which is equipped with a plurality of tines 30 or with a loading plate, as well as with a carrier conveyor 31, which is perpendicular to the tines 30. The tines 30 in their downwardly pivoted horizontal position (fig. 1), in which they extend approximately at the level of the ground, are slid beneath a silage block from the buffer store by driving the tractor backwards.

By pivoting the tilting device 29 through approximately 90° into the position shown in fig. 2, by means of cylinder-piston assemblies 32, the silage block is deposited on the carrier conveyor 31, which in this position extends approximately horizontally and forms the floor of the container of the transport truck 7, in such a way that the main direction of the layers extends approximately vertically and these layers extend approximately perpendicularly to the direction of travel of the carrier conveyor 31.

The carrier conveyor 31 comprises driven transport chains with carriers 33, which displace the silage block resting on the carrier conveyor 31 towards a forwardly and upwardly inclining loosening conveyor 34.

At a distance above the front end portion of the loosening conveyor 34 a driven return or apportioning means 35 extends in the transverse direction. The width of this return or apportioning means 35 is approximately equal to the width of the loosening conveyor 34.

In the embodiment shown in the drawing by way of example the loosening conveyor 34 is equipped with driven transport chains with carriers 36, which carry forwardly inclined, pointed, hook-shaped tines 37.

The return or apportioning means 35 is shown in figs. 1 and 2 as a rake means equipped with tines, but may also be made in a different way.

The excess quantity of crop carried by the loosening conveyor 34 is returned by this return or apportioning means 35. The loosening conveyor 34 and the return or apportioning means 35 therefore together determine the quantity of crop, passing per unit of time.

This loosened and apportioned crop falls down through a hopper 38 on a front transverse conveyor 39, which has a reversible direction of drive and which serves for delivering the crop.

During this delivery the transport truck 7 is moved along the forage passageway with the aid of the tractor, so that a regularly distributed and apportioned quantity of crop is deposited on this forage passageway.

The thickness of the layer deposited on the forage passageway depends on the quantity delivered over the distance covered in a set unit of time.

When the level of the crop to be loosened becomes too high on the loosening conveyor 34, a sensing member 41 mounted on one side wall 40 or on both side walls 40 is actuated. The front side wall 40 is mainly deleted in figs. 1 and 2.

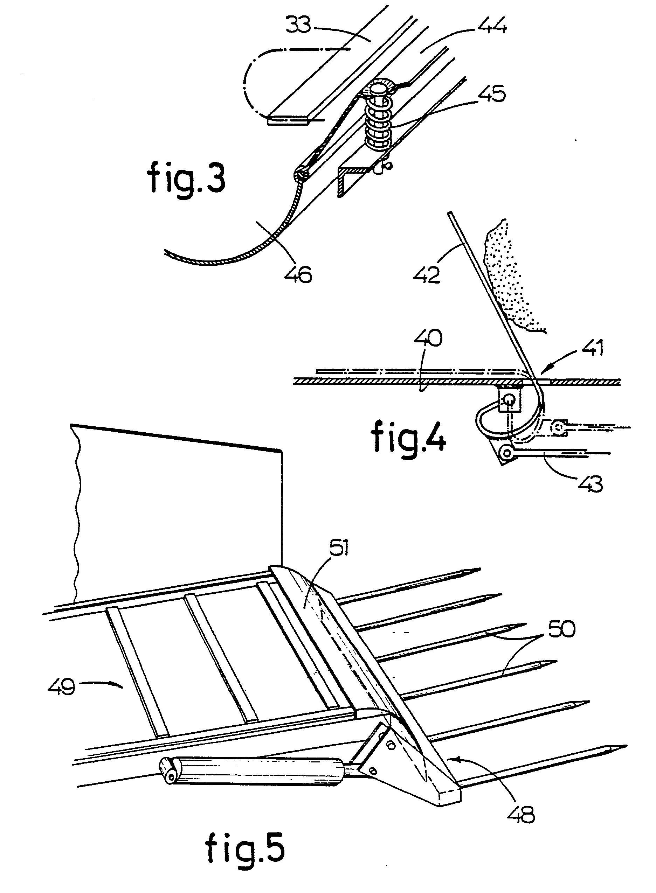

Fig. 4 shows an embodiment by way of example of such sensing member 41. A sensing plate 42 projects outwardly through a slot in the relative side wall 40 and is journalled with a bent end on the outer surface of the relative side wall 40. An actuating rod system 43 is connected to this end of the sensing plate 42 located outside the side wall 40, and can switch the drive means of the carrier conveyor 31 on and off.

If the level of the crop on the loosening conveyor 34 becomes too high, the crop comes into contact with the sensing plate 42 and this sensing plate 42 is pivoted away towards the relative side wall 40 (fig. 4), so that the crop may pass, while the drive means of the supply conveyor 31 is temporarily switched off.

As soon as the level of the crop on the loosening conveyor 34 has dropped sufficiently, the sensing plate 42, or the sensing plates 42, is/are returned in the initial position by means of a spring or other return device which is not shown, so that the drive means of the supply conveyor 31 is switched on again. The sensing plate(s) 42 must be positioned at a level, which lies above the upper surface of a silage block supplied on the supply conveyor 31 and of course underneath the area of operation of the return or apportioning means 35.

For finely chaffed crop, such as for instance maize, a stripper plate 44 (fig. 3) is applied, which comes into contact with the carriers 33 of the carrier conveyor 31 at the beginning of the bottom part. This stripper plate 44 is supported by springs 45 and a bevelled surface thereof comes into contact with the front edge of the carriers 33, so that the stripper plate 44 is pressed downwardly and scrapes along the underside of the passing carriers 33. The stripped material falls into a receptacle 46 from which it is discharged by the carriers 36 of the loosening conveyor 34.

The apparatus, which forms the transport truck 7, is coupled to the lifting device of the tractor and is supported at the rear by one or more swivelling wheels 47.

Fig. 5 shows a further modified embodiment of the apparatus according to the invention, in which the tilting device 48 no longer comprises the carrier conveyor 49, but consists only of tines 50 carried by a cross beam or of a loading plate. In this case a curved guide plate 51 is fitted to the front side of the cross beam carrying the tines 50. The silage block, after having been partly tilted, is supported on this guide plate 51, until the block comes to rest on the carrier conveyor 49.

The invention is not restricted to the embodiments shown in the drawing by way of example, which may be varied in several ways within the scope of the claims.

## Claims

1. Apparatus for loosening and apportioning silage or the like material, provided with a transport container which has a coupling member, adapted to be coupled with a tractor, said transport container comprising a carrier conveyor (31) which carrier conveyor (31) is coupled, or couplable, with a drive means; a loosening and apportioning mechanism (34, 35) being arranged adjacent the front end of the transport container, which loosening and apportioning mechanism (34, 35) is coupled, or couplable, with a drive means, the movement of the carrier conveyor (31) being directed towards the loosening and apportioning mechanism (34, 35); and the transport container further comprising a tilting device (29) arranged at the rear end of the transport container for taking up and discharging the material to the carrier conveyor (31), which tilting device (29) has a support means (30) which in its lowermost position extends approximately horizontally substantially at the level of the ground and which is pivotable through approximately 90°, the loosened material falling downwardly from the loosening and apportioning mechanism (34, 35), characterized in that the tilting device (29) carries out exclusively a pivotal movement, while the loosening and apportioning mechanism (34, 35) comprises a loosening conveyor (34), which inclines upwardly with respect to the horizontal plane and to the carrier conveyor (31).

2. Apparatus according to claim 1, characterized in that the loosening and apportioning mechanism (34, 35) further comprises a driven return or apportioning means (35) extending at a distance above the top end portion of the loosening conveyor (34).

3. Apparatus according to claim 2, characterized in that the loosening conveyor (34) is equipped with a sensing member (41) on one side or on both sides, which controls the drive means of the carrier conveyor (31).

4. Apparatus according to claim 3, characterized in that the (each) sensing member (41) consists of a sensing plate (42), which projects outwardly through a slot in an upstanding side wall (40) of the transport container and which is journalled at one end on the outer surface of the relative side wall (40), said end of the sensing plate (42) being connected with an actuating rod system (43), which switches the drive means of the carrier conveyor (31) on or off.

5. Apparatus according to claim 4, characterized in that the (each) sensing plate (42) may be loaded by a return member in the direction of its initial position and may be pivoted away by the forage towards the relative upstanding side wall (40).

6. Apparatus according to claim 5, characterized in that the (each) sensing plate (42) is positioned at a level, which lies above the upper surface of a silage block supplied on the carrier conveyor (31) and underneath the operating area of the return or apportioning means (35).

7. Apparatus according to any one of the preceding claims, characterized in that the carrier conveyor (31) and the loosening conveyor (34) are each provided with driven transport chains with carriers (33, 36).

8. Apparatus according to any one of the preceding claims, characterized in that the return or apportioning means (35) consists of a rake member equipped with tines.

9. Apparatus according to claim 7 or 8, characterized in that a stripper plate (44) comes into engagement with the carriers (33) of the carrier conveyor (31) at the beginning of the bottom part and may be pushed downwardly against spring pressure, so as to scrape along the underside of the passing carriers (33), an underlying receptacle (46) for the stripped material being passed by the carriers (36) of the loosening conveyor (34).

10. Apparatus according to any one of the preceding claims, characterized in that the tilting device (48) joins the carrier conveyor (49) by means of a bent guide plate (51).

## Patentansprüche

1. Einrichtung zum Ablösen und Portionieren von Silage oder dgl., versehen mit einem Transportbehälter, der ein mit einem Traktor kuppelbares Kupplungsorgan trägt, wobei dieser Transportbehälter einen Mitnehmer-Förderer (31) besitzt, welcher seinerseits mit einem Antrieb verbunden oder verbindbar ist; während ein Ablöse- und Portioniermechanismus (34, 35) neben dem vorderen Ende des Transportbehälters angeordnet ist, welcher mit einem Antrieb verbunden oder verbindbar ist, wobei die Bewegung des Mitnehmer-Förderers (31) zum Ablöse- und Portioniermechanismus (34, 35) hin gerichtet ist; und wobei der Transportbehälter außerdem eine am hinteren Ende dieses Transportbehälters angeordnete Kippeinrichtung (29) zur Aufnahme und zur Abgabe des Materials an den Mitnehmer-Förderer (31) aufweist, welche eine Trag-anordnung (30) besitzt, die in ihrer untersten Position annähernd horizontal im wesentlichen in Bodenhöhe verläuft und um annähernd 90° verschwenkbar ist, sodaß das abgelöste Material vom Ablöse- und Portioniermechanismus (34, 35) nach unten fällt, dadurch gekennzeichnet, daß die Kippeinrichtung (29) ausschließlich eine Schwenkbewegung ausführt, während der Ablöse- und Portionierungsmechanismus (34, 35) einen Ablöse-Förderer (34) aufweist, welcher in Bezug auf die Horizontalebene und den Mitnehmer-Förderer (31) schräg nach oben verläuft.

2. Einrichtung nach Anspruch 1, dadurch gekennzeichnet, daß der Ablöse- und Portionierungsmechanismus (34, 35) außerdem eine angetriebene Rückführ- oder Portionieranordnung (35) besitzt, welche sich in einigem Abstand über dem oberen Endbereich des Ablöse-Förderers (34) erstreckt.

3. Einrichtung nach Anspruch 2, dadurch gekennzeichnet, daß der Ablöse-Förderer (34) mit einem Fühlorgan (41) an einer Seite oder an beiden Seiten ausgerüstet ist, welches den Antrieb des Mitnehmer-Förderers (31) steuert.

4. Einrichtung nach Anspruch 3, dadurch gekennzeichnet, daß das (jedes) Fühlorgan (41) aus einer Fühlplatte (42) besteht, welche durch einen Schlitz in einer hochragenden Seitenwand (40) des Transportbehälters herausragt und welche am einen Ende an der Außenseite der betreffenden Seitenwand (40) gelagert ist, wobei dieses Ende der Fühlplatte (42) mit einem Lenkersystem (43) verbunden ist, welches den Antrieb des Mitnehmer-Förderers (31) ein oder abschaltet.

5. Einrichtung nach Anspruch 4, dadurch gekennzeichnet, daß die (jede) Fühlplatte (42) durch ein Rückführorgan in Richtung ihrer Ausgangslage belastbar ist und durch das Futter zur betreffenden hochragenden Seitenwand (40) abschwenkbar ist.

6. Einrichtung nach Anspruch 5, dadurch gekennzeichnet, daß die (jede) Fühlplatte (42) in einer Höhe angeordnet ist, welche über der Oberseite eines Silageblocks liegt, der auf den Mitnehmer-Förderer (31) gepackt wurde, und unter der Arbeitsfläche der Rückführ- oder Portionierungsanordnung (35).

7. Einrichtung nach einem der vorhergehenden Ansprüche, dadurch gekennzeichnet, daß der Mitnehmer-Förderer (31) und der Ablöse-Förderer (34) jeweils mit angetriebenen Transportketten mit Mitnehmern (33, 36) versehen sind.

8. Einrichtung nach irgendeinem der vorhergehenden Ansprüche, dadurch gekennzeichnet, daß die Rückführ- oder Portionierungsanordnung (35) aus einem mit Zinken bestückten Rechen besteht.

9. Einrichtung nach Anspruch 7 oder 8, dadurch gekennzeichnet, daß eine Abstreifplatte (44) mit den Trägern (33) des Mitnehmer-Förderers (31) am Beginn des Bodenteiles in Eingriff kommt und gegen einen Federdruck nach unten drückbar ist, um an der Unterseite der durchlaufenden Mitnehmer (33) entlangzuschaben, und daß ein darunter liegender Behälter (46) für das abgestreifte Material von den Mitnehmern (36) des Ablöse-Förderers (34) durchlaufen wird.

10. Einrichtung nach irgendeinem der vorhergehenden Ansprüche, dadurch gekennzeichnet, daß die Kippvorrichtung (48) an den Mitnehmer-Förderer (49) über eine gebogene Führungsplatte (51) anstößt.

## Revendications

1. Appareil pour ameublir et répartir une matière ensilée ou autre, équipé d'un conteneur de transport qui possède un élément d'accouplement conçu pour être accouplé à un tracteur, ledit conteneur de transport comprenant un transporteur chargeur (31) qui est accouplé ou accouplable à des moyens d'entraînement; un mécanisme (34, 35) d'ameublissement et de répartition étant agencé à proximité immédiate de l'extrémité avant du conteneur de transport, lequel mécanisme (34, 35) d'ameublissement et de répartition est accouplé ou accouplable à des moyens d'entraînement le mouvement de transporteur chargeur (31) étant dirigé vers le mécanisme (34, 35) d'ameublissement et de répartition, et le conteneur de transport comprenant en outre un dispositif inclinable (29) agencé à l'extrémité arrière du conteneur de transport pour prendre et décharger la matière sur le transporteur chargeur (31), lequel dispositif inclinable (29) comporte un moyen (30) de support qui, dans sa position la plus basse, s'étend à peu près horizontalement sensiblement au niveau du sol et qui peut pivoter sur environ 90°, la matière ameublie tombant vers le bas du mécanisme (34, 35) d'ameublissement et de répartition, caractérisé en ce que le dispositif inclinable (29) exclusivement un mouvement de pivotement, tandis que le mécanisme (34, 35) d'ameublissement et de répartition comprend un transporteur (34) d'ameublissement qui est incliné vers le haut par rapport au plan horizontal et par rapport au transporteur chargeur (31).

2. Appareil selon la revendication 1, caractérisé en ce que le mécanisme (34, 35) d'ameublissement et de répartition comprend en outre un moyen mené (35) de retour ou de répartition s'étendant sur une certaine distance au-dessus de la partie extrême supérieure du transporteur d'ameublissement (34).

3. Appareil selon la revendication 2, caractérisé en ce que le transporteur (34) d'ameublissement est équipé d'un élément (41) de détection sur un premier côté ou sur les deux côtés, qui commande les moyens d'entraînement du transporteur (31).

4. Appareil selon la revendication 3, caractérisé en ce que le (chaque) élément (41) de détection comprend une plaque (42) de détection qui fait saillie vers l'extérieur par une fente ménagée dans une paroi latérale (40) orientée vers le haut de conteneur de transport et qui tourillonne, à une première extrémité, sur la surface extérieure de la paroi latérale correspondante (40), ladite extrémité de la plaque (42) de détection étant reliée à un système (43) de tringles d'actionnement qui met en marche ou arrête les moyens d'entraînement du transporteur chargeur (31).

5. Appareil selon la revendication 4, caractérisé en ce que la (chaque) plaque (42) de détection peut être chargée par un élément de rappel dans la direction de sa position initiale et peut être éloignée en pivotant sous l'action du fourrage, vers la paroi latérale correspondante (40) orientée vers le haut.

6. Appareil selon la revendication 5, caractérisé en ce que la (chaque) plaque (42) de détection est positionnée à un niveau qui s'étend au-dessus de la surface supérieure d'un bloc à ensiler amené sur le transporteur chargeur (31) et au-dessous de la zone de travail du moyen (35) de retour ou de répartition.

7. Appareil selon l'une quelconque des revendications précédentes, caractérisé en ce que le transporteur chargeur (31) et le transporteur (34) d'ameublissement sont équipés chacun de chaînes menées de transport et d'éléments porteurs (33, 36).

8. Appareil selon l'une quelconque des revendications précédentes, caractérisé en ce que le moyen (35) de retour ou de répartition comprend un rateau équipé de dents.

9. Appareil selon la revendication 7 ou 8, caractérisé en ce qu'une plaque (44) de dégagement vient en contact avec les éléments porteurs (33) du transporteur chargeur (31) au début de la partie inférieure et peut être poussée vers le bas contre la pression d'un ressort afin de racler contre la face inférieure des éléments porteurs passants (33), un réceptacle sous-jacent (46) de la matière dégagée étant parcouru par les éléments porteurs (36) du transporteur (34) d'ameublissement.

10. Appareil selon l'une quelconque des revendications précédentes, caractérisé en ce que le dispositif inclinable (48) est relié au transporteur chargeur (49) au moyen d'une plaque cintrée (51) de guidage.

fig.1

35 40 41 7 33 31

41 37 34 36

38 39 43 46 32 47 29 30

0 032 776

fig.2

**fig.3**

**fig.4**

**fig.5**